# FASCICULE DE BREVET EUROPEEN

(11) **EP 4 430 290 B1**
(45) Date de publication et mention de la délivrance du brevet: **31.12.2025**
(21) Numéro de dépôt: 22813228.8
(22) Date de dépôt: 03.11.2022
(51) Int. Cl.: F02D 41/02, F02D 41/22, F02D 41/08

(54) **PROCÉDÉ ET SYSTÈME DE SUPERVISION DES CONSOMMATEURS D'ÉNERGIE ÉLECTRIQUE ET DE COMMANDE DU RÉGIME DU MOTEUR D'UN VÉHICULE AUTOMOBILE**
VERFAHREN UND SYSTEM ZUR ÜBERWACHUNG VON VERBRAUCHERN ELEKTRISCHER ENERGIE UND ZUR STEUERUNG DER MOTORDREHZAHL EINES KRAFTFAHRZEUGS
METHOD AND SYSTEM FOR MONITORING CONSUMERS OF ELECTRICAL ENERGY AND CONTROLLING THE ENGINE SPEED OF A MOTOR VEHICLE

(30) Priorité: 08.11.2021 FR 2111840
(43) Date de publication de la demande: 18.09.2024
(73) Titulaire: Horse Powertrain Solutions, S.L.U., 28108 Alcobendas Madrid (ES)
(72) Inventeur: BERARD, Sandrine, 91510 LARDY (FR); GUERMANN, Jean, 91510 LARDY (FR); SAVY, Sylvain, 91510 LARDY (FR)
(74) Mandataire: Elzaburu S.L.P.
(86) Numéro de dépôt international: PCT/EP2022/080645
(87) Numéro de publication internationale: WO 2023/078981

(56) Documents cités:
- DE-A1- 102007 015 875
- DE-A1- 102019 202 210
- FR-A1- 2 920 474
- US-A1- 2018 086 332

## Description

La présente invention concerne le domaine des moteurs à combustion interne, et plus particulièrement les systèmes de post traitement des gaz d'échappement pourvus d'un filtre à particules et disposé dans la ligne d'échappement.

Les filtres à particules sont utilisés pour traiter les particules contenues dans les gaz de combustion des moteurs à combustion interne, notamment les particules de suies dans les moteurs Diesel ou les particules dites fines dans les moteurs à allumage commandé.

De manière connue, un filtre à particules fonctionne de manière séquentielle. Lors du fonctionnement normal du moteur, le filtre à particules stocke les particules sans les traiter dans des proportions proches de 100%. Ensuite, de manière séquentielle, par exemple lorsque la masse de particules atteint une valeur de seuil, il est nécessaire de régénérer ou purger le filtre à particules afin d'éliminer les particules accumulées. En effet, l'accumulation des particules génère une contrepression à l'échappement du véhicule automobile, ce qui diminue fortement les performances du moteur. En outre, lorsque la masse de particules stockée dans le filtre à particules augmente, la capacité de filtration dudit filtre diminue. En d'autres termes, lors du fonctionnement normal du moteur, le filtre à particules retient une proportion de moins en moins élevée de particules.

La régénération du filtre à particules consiste à basculer le mode de fonctionnement du moteur dans un mode de réglage spécifique de manière à brûler les particules accumulées dans le filtre lorsque la masse des particules atteint une valeur de seuil. Plus précisément, la combustion des particules accumulées dans le filtre est obtenue par l'intermédiaire d'un réglage de combustion spécifique permettant d'obtenir une concentration d'oxygène et un niveau thermique en entrée du filtre à particules suffisants pour permettre la combustion des particules dans le filtre avec une bonne efficacité.

Toutefois, en fonction de la masse de particules accumulées dans le filtre à particules, il est nécessaire de contrôler la concentration d'oxygène et de réguler la température des gaz d'échappement en amont du filtre à particules afin qu'elles ne dépassent pas des seuils au-delà desquels la réaction de combustion pourrait s'emballer jusqu'à venir endommager le filtre à particules de façon irréversible.

La régénération d'un filtre à particules est également connue pour générer une surconsommation de carburant. En effet, la température des gaz d'échappement nécessaire à la régénération, par exemple, de l'ordre de 650°C sur un moteur Diesel, est obtenue par la dégradation du rendement de combustion du moteur par rapport au rendement en fonctionnement normal du moteur et par l'apport de carburant, par des injections tardives dans les cycles du moteur, en amont du filtre à particules.

Plus le cycle de roulage du véhicule est à charge et/ou à régime élevé, plus la température du filtre à particules est élevée. L'écart de température pour initier la régénération du filtre à particules est ainsi plus faible. Il est donc moins coûteux, en termes de quantité de carburant nécessaire pour régénérer le filtre à particules, de procéder à une régénération à haute vitesse plutôt qu'à faible vitesse.

Il est connu d'utiliser un procédé de régénération du filtre à particules dans lequel des valeurs de seuils de masse de déclenchement de la régénération sont différentes en fonction de la vitesse du véhicule automobile.

Par exemple, il est possible d'utiliser quatre seuils de masse de particules distincts. Le seuil de masse le plus bas permet de déclencher une régénération du filtre à particules à vitesse élevée du véhicule, par exemple, sur une voie rapide. Un deuxième seuil de masse, supérieur au seuil de masse le plus bas, permet de déclencher une régénération du filtre à particules à une deuxième vitesse du véhicule, inférieure à la vitesse la plus élevée. Un troisième seuil de masse, supérieur au deuxième seuil de masse, permet de déclencher une régénération du filtre à particules à une troisième vitesse du véhicule, inférieure à la deuxième vitesse, par exemple lors du roulage en ville. Un quatrième seuil de masse, supérieur au troisième seuil de masse, permet de déclencher une régénération du filtre à particules à une quatrième vitesse du véhicule, inférieure à la troisième vitesse.

Dans certains cas, par exemple lors de courts trajets quotidiens, des roulages exclusivement urbains à très faible vitesse ou des trajets en haute altitude, le niveau de chargement en suies peut être élevés et les régénérations actives autonomes, qui sont déclenchées par un basculement du mode de réglage de combustion du moteur indépendamment de toute action de la part du conducteur du véhicule, ne sont plus suffisantes pour garantir la régénération du filtre à particules.

Il est connu d'appliquer un procédé de recommandation de conduite, nommé « driving recommendation » en termes anglo-saxons, par le calculateur du moteur capable d'effectuer d'autres modifications de fonctionnement du véhicule dans le but d'atteindre la régénération du filtre à particules.

Un tel procédé intervient généralement pendant la phase de régénération autonome juste avant que la masse de particules dépasse la valeur de seuil indiquant que le filtre à particules est colmaté.

Le mode de recommandation de conduite consiste à informer le conducteur du véhicule, par exemple, par l'intermédiaire d'un voyant sur le tableau de bord, que la masse de particules fines comprises dans le filtre à particules est anormalement élevée et qu'une régénération du filtre à particules est en cours.

L'efficacité de la régénération est améliorée grâce à deux mesures en combinaison. D'une part, la charge, c'est-à-dire le couple, du moteur, est augmentée en activant une pluralité d'actionneurs ou consommateurs d'énergie électrique aptes à prélever un couple élevé sur le moteur. De tels consommateurs d'énergie électrique peuvent être, par exemple des thermoplongeurs et un groupe moto-ventilateur configurés pour refroidir le moteur et prélevant un couple élevé sur le moteur. La lunette arrière chauffant est également un actionneur apte à prélever un couple sur le moteur.

De tels concepts sont par exemple divulgués dans les documents FR 2920474 A1, US 2018086332 A1, DE 102019202210 A1 ou DE 102007015875 A1.

Le couple délivré par le moteur correspond à la somme de la consigne de couple issue de l'enfoncement de la pédale d'accélérateur pour l'entrainement du véhicule, et du ou des couples des différents consommateurs d'énergie électrique prélevant un couple sur le moteur.

L'augmentation du couple moteur conduit à une augmentation des rejets thermiques à l'échappement. D'autre part, le régime de ralenti du moteur est également augmenté.

En effet, la régulation du ralenti du moteur est réalisée par la modulation de la quantité de carburant injectée dans le moteur de manière à réguler, en boucle fermée, sur une consigne de régime du moteur, et non sur une consigne de couple.

Cependant, en fonction des consommateurs d'énergie électrique prélevant du couple au moteur, le couple prélevé sur le moteur est plus ou moins important, de sorte que la régulation de régime implique des quantités plus ou moins importantes de carburant injectées et un couple plus ou moins élevé pour maintenir le régime du moteur.

Toutefois, si un des consommateurs d'énergie électrique, par exemple le groupe moto ventilateur, ne peut pas être activé, par exemple il n'est pas disponible ou il est défaillant, le régime de ralenti accéléré ne doit pas être activé sous peine d'endommager le filtre à particules par un emballement thermique dû à une combustion incontrôlée des particules.

On connait les diagnostics de continuité électrique des groupes moto-ventilateurs. Toutefois, la détection de l'indisponibilité ou de la défaillance du groupe moto-ventilateur n'est pas possible par un détecteur de pannes car aucun défaut ou diagnostic électrique n'est transmis au calculateur du moteur.

De plus, le diagnostic de continuité électrique est insuffisant car il ne permet pas de détecter des problèmes mécaniques éventuels.

L'objet de la présente invention est donc de fournir un procédé et un système de commande du régime du moteur en fonction de la supervision de l'état des consommateurs d'énergie électrique, et notamment le groupe moto-ventilateur qui est généralement le plus gros consommateur d'énergie électrique du véhicule, durant le mode de recommandation de conduite, nommé « driving recommendation » en termes anglo-saxons, afin de réduire le nombre de colmatage du filtre à particules et garantir l'intégrité du filtre à particules, en conservant un régime de ralenti nominal en cas de détection de défaillance dudit groupe moto-ventilateur.

L'objet de la présente invention a ainsi pour but de détecter la défaillance de tout consommateur d'énergie électrique apte à prélever du couple sur le moteur et de commander le régime du moteur en fonction de la détection d'une telle défaillance.

L'invention a pour objet un procédé de commande d'un moteur à combustion interne comprenant un collecteur d'admission d'air frais, un collecteur d'échappement et un système de dépollution comprenant au moins un premier dispositif de dépollution et un filtre à particules, dit « catalytic soot filter», d'acronyme « CSF » en termes anglo-saxons, disposé dans la ligne d'échappement en aval d'un catalyseur d'oxydation, le système de dépollution comprenant en outre un capteur de pression différentielle implanté en amont et en aval du filtre à particules et un capteur de température disposé en amont dudit filtre à particules.

Selon le procédé, on supervise l'état des consommateurs d'énergie électrique durant un mode de fonctionnement du moteur en recommandation de conduite, ou « driving recommendation » en termes anglo-saxons, configuré pour détecter la défaillance de tout consommateur d'énergie électrique apte à prélever du couple sur le moteur et pour commander le régime du moteur en fonction pendant une phase de régénération autonome du filtre à particules, afin de détecter la défaillance de tout consommateurs d'énergie électrique apte à prélever du couple sur le moteur et on commande le régime du moteur en fonction de la détection de la défaillance de tout consommateur d'énergie électrique.

Avantageusement, lors de la supervision de l'état des consommateurs d'énergie électrique, on compare la masse de particules présentes dans le filtre à particules avec une première valeur de seuil.

La pression différentielle permet, en association avec le débit gazeux traversant le filtre, de déterminer la masse de particules stockées dans le filtre à particules.

La première valeur de seuil correspond au seuil le plus élevé permettant le déclenchement des régénérations actives du filtre à particules sur une valeur de seuil de vitesse la plus faible en modifiant uniquement le mode de combustion. La première valeur de seuil sert au déclenchement du mode de fonctionnement du moteur en mode de recommandation de conduite.

Avantageusement, lors de la supervision de l'état des consommateurs d'énergie électrique, on compare en continu de la charge de l'alternateur du moteur avec une deuxième valeur de seuil. Lorsque la charge de l'alternateur est inférieure ou égale à la deuxième valeur de seuil, on transmet au calculateur du moteur une consigne de régime de ralenti nominal et lorsque la charge de l'alternateur est supérieure à la deuxième valeur de seuil, on transmet au calculateur du moteur une consigne de régime de ralenti accéléré.

Ainsi, on détecte si le couple est normal ou si le couple est trop faible, ce qui est le cas en cas de défaillance d'un consommateur d'énergie électrique. Un couple élevé se traduit par une charge d'alternateur élevée, on se base sur la surveillance de la charge de l'alternateur pour déterminer le niveau de couple et, indirectement la panne d'un consommateur électrique.

Par exemple, lors de la supervision de l'état des consommateurs d'énergie électrique, on vérifie l'état de l'alternateur du moteur.

Selon un second aspect, l'invention concerne un système ou une unité électronique de commande d'un moteur à combustion interne comprenant un collecteur d'admission d'air frais, un collecteur d'échappement et un système de dépollution comprenant au moins un premier dispositif de dépollution et un filtre à particules disposé dans la ligne d'échappement en aval d'un catalyseur d'oxydation, le système de dépollution comprenant en outre un capteur de pression différentielle implanté en amont et en aval du filtre à particules et un capteur de température disposé en amont dudit filtre à particules.

L'unité électronique de commande comprend un système de supervision de l'état des consommateurs d'énergie électrique durant un mode de fonctionnement du moteur en recommandation de conduite, ou « driving recommendation » en termes anglo-saxons, configuré pour détecter la défaillance de tout consommateurs d'énergie électrique apte à prélever du couple sur le moteur et de commander le régime du moteur en fonction pendant une phase de régénération autonome du filtre à particules.

Ledit système de supervision de l'état des consommateurs d'énergie électrique durant un mode de fonctionnement du moteur en recommandation de conduite étant configuré pour détecter la défaillance de tout consommateur d'énergie électrique apte à prélever du couple sur le moteur.

L'unité électronique de commande comprend en outre un système de commande du régime du moteur en fonction de la détection de la défaillance de tout consommateur d'énergie électrique par le système de supervision.

Avantageusement, le système de supervision de l'état des consommateurs d'énergie électrique comprend un module de comparaison de la masse de particules présentes dans le filtre à particules avec une première valeur de seuil.

La pression différentielle permet, en association avec le débit gazeux traversant le filtre, de déterminer la masse de particules stockées dans le filtre à particules.

La première valeur de seuil correspond au seuil le plus élevé permettant le déclenchement des régénérations actives du filtre à particules sur une valeur de seuil de vitesse la plus faible en modifiant uniquement le mode de combustion. La première valeur de seuil S1 sert au déclenchement du mode de fonctionnement du moteur en mode de recommandation de conduite.

Avantageusement, le système de supervision de l'état des consommateurs d'énergie électrique comprend un module de comparaison en continu de la charge de l'alternateur du moteur avec une deuxième valeur de seuil.

Le module de comparaison est ainsi configuré pour détecter si le couple est normal ou si le couple est trop faible, ce qui est le cas en cas de défaillance d'un consommateur d'énergie électrique. Un couple élevé se traduit par une charge d'alternateur élevée, on se base sur la surveillance de la charge de l'alternateur pour déterminer le niveau de couple et, indirectement la panne d'un consommateur électrique.

Lorsque la charge de l'alternateur est inférieure ou égale à la deuxième valeur de seuil, le système de commande du régime du moteur est configuré pour transmettre au calculateur du moteur une consigne de régime de ralenti nominal et lorsque la charge de l'alternateur est supérieure à la deuxième valeur de seuil, le système de commande du régime du moteur est configuré pour transmettre au calculateur du moteur une consigne de régime de ralenti accéléré.

Par exemple, le système de supervision de l'état des consommateurs d'énergie électrique comprend un module de vérification de l'état de l'alternateur du moteur.

Selon un autre aspect, l'invention concerne un véhicule automobile comprenant une unité électronique de commande tel que décrit précédemment.

D'autres buts, caractéristiques et avantages de l'invention apparaîtront à la lecture de la description suivante, donnée uniquement à titre d'exemple non limitatif, et faite en référence aux dessins annexés sur lesquels :
[Fig 1] représente, de manière très schématique, un exemple de structure d'un moteur à combustion interne d'un véhicule automobile équipé d'une ligne d'échappement pourvue d'un système de post-traitement des gaz d'échappement et d'une unité de commande selon l'invention ;
[Fig 2] représente un graphique illustrant le couple moteur en abscisse avec le taux d'oxygène en ordonnée ;
[Fig 3] représente un graphique illustrant le couple moteur en abscisse avec la température en ordonnée ; et
[Fig 4] représente la synoptique d'un procédé de commande selon l'invention mise en œuvre par l'unité de commande de la figure 1.

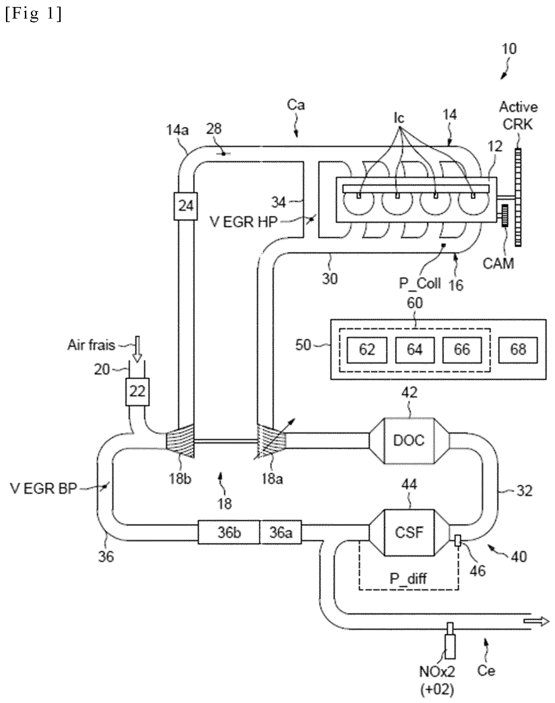

Sur la figure 1, on a représenté, de manière schématique, la structure générale d'un moteur à combustion interne 10, notamment de type Diesel, d'un véhicule automobile.

Cette architecture est donnée à titre d'exemple et ne limite par l'invention à la seule configuration à laquelle peut s'appliquer la supervision des consommateurs électriques et la commande du régime du moteur selon l'invention.

Dans l'exemple illustré, le moteur à combustion interne 10 comprend, de manière non limitative, quatre cylindres 12 en ligne, un collecteur d'admission d'air frais 14, un collecteur d'échappement 16 et un système de turbo-compression 18.

Les cylindres 12 sont alimentés en air par l'intermédiaire du collecteur d'admission 14, ou répartiteur d'admission, lui-même alimenté par une conduite 20 pourvue d'un filtre à air 22 et du compresseur 18b du turbocompresseur 18 du moteur 10.

Tel qu'illustré, chaque cylindre 12 est alimenté par du carburant, de type gazole, par l'intermédiaire d'un injecteur de carburant Ic.

De manière connue, le turbocompresseur 18 comporte essentiellement une turbine 18a entraînée par les gaz d'échappement et un compresseur 18b monté sur le même axe ou arbre que la turbine 18a et assurant une compression de l'air distribué par le filtre à air 22, dans le but d'augmenter la quantité (débit massique) d'air admise dans les cylindres 12 du moteur 10. La turbine 18a peut être du type « à géométrie variable », c'est-à-dire que la roue de la turbine est équipée d'ailettes à inclinaison variable afin de moduler la quantité d'énergie prélevée sur les gaz d'échappement, et ainsi la pression de suralimentation.

Un échangeur thermique 24 est placé après la sortie du compresseur 18b équipant la conduite d'alimentation 14a du collecteur d'admission 14 en air frais.

Le moteur à combustion interne 10 comprend ainsi un circuit d'admission Ca et un circuit d'échappement Ce.

Le circuit d'admission Ca comprend, d'amont en aval dans le sens de circulation de l'air :
- le filtre à air 22 ou boîte à air ;
- le compresseur 18b du turbocompresseur 18 configuré pour comprimer l'air prélevé dans l'atmosphère extérieure et le cas échéant des gaz d'échappement recyclés à basse pression, tel que cela sera décrit ultérieurement ;
- l'échangeur thermique 24 configuré pour refroidir les gaz d'admission correspondant à un mélange d'air frais et de gaz recyclés, après leur compression dans le compresseur 18b ;
- une vanne de réglage 28 disposée dans la conduite d'alimentation 14a du collecteur d'admission 14, en aval de l'échangeur thermique 24 et en amont du collecteur d'admission 14, ladite vanne 28 étant configurée pour régler le débit d'air et de gaz recyclés à basse pression entrant dans les cylindres 12 ; et
- le collecteur d'admission 14.

Le circuit d'échappement Ce comprend, d'amont en aval dans le sens de circulation des gaz brûlés :
- le collecteur d'échappement 16 ;
- la turbine 18a du turbocompresseur 18 configurée pour prélever de l'énergie sur les gaz d'échappement qui la traversent, ladite énergie de détente étant transmise au compresseur 18b par l'intermédiaire de l'arbre commun, pour la compression des gaz d'admission ;
- un système 40 de dépollution des gaz de combustion du moteur.

En ce qui concerne le collecteur d'échappement 16, celui-ci récupère les gaz d'échappement issus de la combustion et évacue ces derniers vers l'extérieur, par l'intermédiaire d'un conduit d'échappement des gaz 30 débouchant sur la turbine 18a du turbocompresseur 18 et par une ligne d'échappement 32 montée en aval de ladite turbine 18a.

De manière non limitative, le moteur 10 comprend deux circuits de recirculation partielle 34, 36 des gaz d'échappement à l'admission, dits « exhaust gas recirculation » ou « EGR », en termes anglo-saxons.

Le premier circuit 34 de recirculation des gaz d'échappement à haute pression, dit « EGR HP », prend naissance en un point du conduit d'échappement 30 en amont de la turbine 18a et renvoie les gaz d'échappement en un point de la conduite d'alimentation 14a en aval du compresseur 18b et notamment en aval de l'échangeur thermique 24 et de la vanne de réglage 28. Le premier circuit 34 de recirculation comprend une première vanne « V EGR HP » configurée pour réguler le débit des gaz d'échappement recyclés à haute pression.

Le premier circuit 34 de recirculation des gaz d'échappement est configuré pour récupérer une partie des gaz d'échappement et les réintroduire dans le collecteur d'admission d'air 14, afin de limiter la quantité d'oxydes d'azote produits par la combustion tout en évitant la formation de fumée dans les gaz d'échappement. Le premier circuit de recirculation 34 pourrait, par exemple, comporter un échangeur thermique (non représenté).

Le deuxième circuit 36 de recirculation des gaz d'échappement à basse pression, dit « EGR BP », prend naissance en un point de la ligne d'échappement 32, en aval de ladite turbine 18a, et notamment en aval du système 40 de dépollution des gaz et renvoie les gaz d'échappement en un point de la conduite 20 d'alimentation en air frais, en amont du compresseur 18b du turbocompresseur 18.

Tel qu'illustré, le deuxième circuit 36 de recirculation comprend, dans le sens de circulation des gaz recyclés, un filtre 36a, un refroidisseur 36b et une deuxième vanne « V EGR BP » configurée pour réguler le débit des gaz d'échappement recyclés à basse pression. La deuxième vanne « V EGR BP » est disposée en aval du refroidisseur 36b, en aval du débitmètre 26 et en amont du compresseur 18b.

A titre d'exemple nullement limitatif, le système 40 de dépollution des gaz de combustion du moteur comprend un catalyseur d'oxydation 42 situé dans la ligne d'échappement 32 directement en aval de la turbine 18a, et un filtre à particules 44, dit « catalytic soot filter», d'acronyme « CSF » en termes anglo-saxons, disposé dans la ligne d'échappement 32 en aval du catalyseur d'oxydation 42.

Une sonde à oxygène de type proportionnelle (non représentée sur la figure 1) est montée en amont du catalyseur d'oxydation 42. De manière connue, elle sert à la régulation de richesse du mélange air-carburant.

Le système 40 comprend en outre un capteur 46 de pression différentielle P_diff implanté en amont et en aval du filtre à particules 44 et un capteur de température T1 disposé directement en amont du filtre à particules 44.

La pression différentielle permet, en association avec le débit gazeux traversant le filtre, de déterminer la masse de particules stockées dans le filtre à particules 44.

Le moteur comprend une unité électronique de commande 50 configurée pour commander les différents éléments du moteur à combustion interne et notamment le régime du moteur.

L'unité de commande électronique 50 pourrait recevoir d'autres données, telles que les températures à différents endroits du moteur, ou d'autres pressions.

L'unité de commande électronique 50 comprend un système 60 de supervision de l'état des consommateurs d'énergie électrique, et notamment le groupe moto-ventilateur, durant un mode de fonctionnement du moteur appelé recommandation de conduite, ou « driving recommendation » en termes anglo-saxons, configuré pour détecter la défaillance de tout consommateurs d'énergie électrique aptes à prélever du couple sur le moteur et de commander le régime du moteur en fonction.

Ainsi, le nombre de colmatage du filtre à particules peut être réduit et l'intégrité du filtre à particules est garantie tout en conservant un régime de ralenti nominal en cas de détection de défaillance dudit groupe moto-ventilateur.

Le mode de recommandation de conduite est appliqué par le calculateur du moteur afin d'effectuer d'autres modifications de fonctionnement du véhicule dans le but d'atteindre la régénération du filtre à particules.

Un tel mode de fonctionnement du moteur intervient pendant la phase de régénération autonome juste avant que la masse de particules dépasse la valeur de seuil indiquant que le filtre à particules est colmaté.

Le mode de recommandation de conduite consiste à informer le conducteur du véhicule, par exemple, par l'intermédiaire d'un voyant sur le tableau de bord, que la masse de particules fines comprises dans le filtre à particules est anormalement élevée et qu'une régénération du filtre à particules est en cours.

Le conducteur est informé qu'il ne doit pas interrompre le processus de régénération du filtre à particules et qu'il doit éviter d'utiliser certains rapports de boîte de vitesses.

Le mode de recommandation de conduite permet d'améliorer l'efficacité des filtres à particules en augmentant la charge du moteur, par exemple par la mise en marche de thermoplongeurs et du groupe moto-ventilateur, et en augmentant le régime de ralenti du moteur, par exemple autour de 1050 tr/min.

Le système 60 de supervision de l'état des consommateurs d'énergie électrique comprend un module 62 de comparaison de la masse de particules présentes dans le filtre à particules 44 avec une première valeur de seuil S1.

La première valeur de seuil S1 correspond au seuil le plus élevé permettant le déclenchement des régénérations actives du filtre à particules 44 sur une valeur de seuil de vitesse la plus faible en modifiant uniquement le mode de combustion. La première valeur de seuil S1 sert au déclenchement du mode de fonctionnement du moteur en mode de recommandation de conduite.

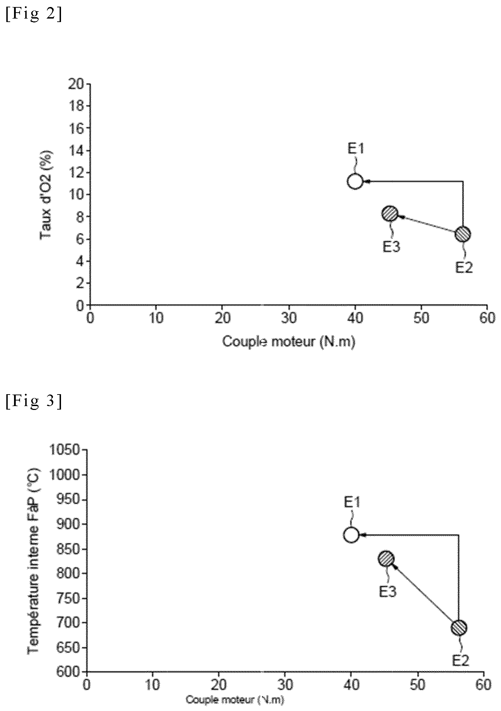

On peut se référer aux figures 2 et 3 qui représentent des graphiques illustrant le couple moteur en abscisse avec respectivement le taux d'oxygène et la température en ordonnée.

L'état E1 correspond à un état de référence dans lequel les consommateurs d'énergie électriques sont actifs et fonctionnels. La température interne du filtre à particules 44 est d'environ 700°C et le taux d'oxygène est de 6%. Les conditions de régénération du filtre à particules sont contrôlées et maîtrisées par le calculateur du moteur.

L'état E2 correspond à un état critique dans lequel les consommateurs d'énergie électriques sont défaillants et ne prélèvent donc plus de couple sur le moteur, et le moteur fonctionne à un régime de ralenti accéléré, le régime étant maintenu avec moins de couple. La température interne du filtre à particules 44 est supérieure à la température correspondant à l'état E1 de référence, et le taux d'oxygène est doublé par rapport à celui de l'état E1 de référence. Les gradients thermiques peuvent provoquer un endommagement irréversible du filtre à particules.

L'état E3 correspond à un état contrôlé dans lequel les consommateurs d'énergie électrique sont défaillants et ne prélèvent donc plus de couple sur le moteur, et le moteur fonctionne à un régime de ralenti nominal. La température interne du filtre à particules 44 est comprise entre la température à l'état E1 de référence et la température à l'état E2 critique, et le taux d'oxygène est plus proche du taux d'oxygène à l'état E1 de référence que de celui qui correspond à l'état E2 critique. L'état E3 permet d'éviter un emballement thermique et l'endommagement du filtre à particules.

En cas d'indisponibilité d'un consommateur d'énergie électrique pendant le mode de recommandation de conduite, sous forte masse de particules fines, le calculateur du moteur doit pouvoir appliquer un régime de ralenti nominal afin de limiter l'apport d'oxygène lors d'un retour au ralenti qui pourrait conduire à un emballement thermique du filtre à particules.

En effet, de manière générale, pour une masse de particules dans un filtre à particules, il est nécessaire de rester en dessous d'une valeur de seuil du taux d'oxygène et de la température pour éviter un risque d'emballement.

Le système 60 de supervision de l'état des consommateurs d'énergie électrique comprend un module 64 de vérification de l'état de l'alternateur du moteur (non représenté).

Le système 60 de supervision de l'état des consommateurs d'énergie électrique comprend un module 66 de comparaison en continu de la charge de l'alternateur du moteur avec une deuxième valeur de seuil S2.

Le module 66 de comparaison est ainsi configuré pour détecter si le couple est normal ou si le couple est trop faible, ce qui est le cas en cas de défaillance d'un consommateur d'énergie électrique. Un couple élevé se traduit par une charge d'alternateur élevée, on se base sur la surveillance de la charge de l'alternateur pour déterminer le niveau de couple et, indirectement la panne d'un consommateur électrique.

L'unité électronique de commande 50 comprend en outre un système 68 de commande du régime du moteur en fonction de la détection de la défaillance de tout consommateurs d'énergie électrique par le système de supervision 60.

Lorsque la charge de l'alternateur est inférieure ou égale à la deuxième valeur de seuil S2, le système 68 de commande du régime du moteur transmet au calculateur du moteur une consigne de régime de ralenti nominal.

Lorsque la charge de l'alternateur est supérieure à la deuxième valeur de seuil S2, le système 68 de commande du régime du moteur transmet au calculateur du moteur une consigne de régime de ralenti accéléré.

La supervision de la charge de l'alternateur permet de détecter une défaillance de n'importe quel consommateur d'énergie électrique du véhicule et donc de s'affranchir d'un dispositif de détection de panne propre au mode de fonctionnement en recommandation de conduite.

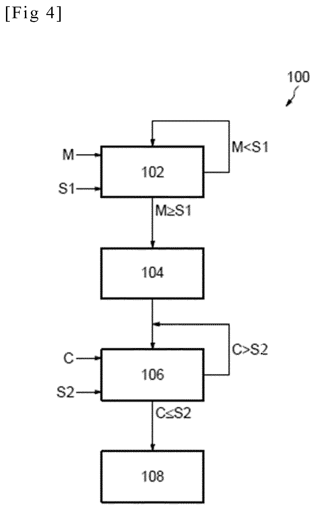

Tel qu'illustré sur la figure 4, un procédé 100 de commande configuré pour commander les différents éléments du moteur à combustion interne et notamment le régime du moteur.

Lors d'une première étape 102, on compare la masse de particules présentes dans le filtre à particules 44 avec une première valeur de seuil S1.

La première valeur de seuil S1 correspond au seuil le plus élevé permettant le déclenchement des régénérations actives du filtre à particules 44 sur une valeur de seuil de vitesse la plus faible en modifiant uniquement le mode de combustion. La première valeur de seuil S1 sert au déclenchement du mode de fonctionnement du moteur en mode de recommandation de conduite.

Lors d'une seconde étape 104, on vérifie l'état de l'alternateur du moteur (non représenté).

Lorsque l'alternateur fonctionne et que le mode de fonctionnement du moteur est en mode de recommandation de conduite, on compare, à l'étape 106, en continu la charge de l'alternateur du moteur avec une deuxième valeur de seuil S2.

Ainsi, on peut détecter si le couple est normal ou si le couple est trop faible, ce qui est le cas en cas de défaillance d'un consommateur d'énergie électrique. Un couple élevé se traduit par une charge d'alternateur élevée, on se base sur la surveillance de la charge de l'alternateur pour déterminer le niveau de couple et, indirectement la panne d'un consommateur électrique.

Les étapes 102, 104, 106 correspondent à la supervision de la charge de l'alternateur et indirectement de l'état des consommateurs d'énergie électrique afin de détecter une défaillance de n'importe quel consommateur d'énergie électrique du véhicule durant un mode de fonctionnement du moteur en recommandation de conduite.

Le procédé comprend en outre une étape 108 de commande du régime du moteur en fonction de la détection de la défaillance de tout consommateur d'énergie électrique par le système de supervision 60.

Lorsque la charge C de l'alternateur est inférieure ou égale à la deuxième valeur de seuil S2, on transmet au calculateur du moteur une consigne de régime de ralenti nominal.

Lorsque la charge C de l'alternateur est supérieure à la deuxième valeur de seuil S2, on transmet au calculateur du moteur une consigne de régime de ralenti accéléré.

La stratégie de supervision des consommateurs d'énergie électrique est autonome et transparente pour le conducteur, et elle ne nécessite aucune intervention mécanique sur le moteur.

La durée entre deux entretiens du véhicule est ainsi rallongée et le coût d'entretien du véhicule est réduit par l'abaissement de la consommation de carburant et la réduction de la dilution du gazole dans l'huile du moteur.

## Revendications

1. Procédé de commande (100) d'un moteur à combustion interne comprenant un collecteur d'admission d'air frais (14), un collecteur d'échappement (16) et un système de dépollution (40) comprenant au moins un premier dispositif de dépollution (42) et un filtre à particules (44) disposé dans la ligne d'échappement (32) en aval d'un catalyseur d'oxydation (42), le système de dépollution (40) comprenant en outre un capteur (46) de pression différentielle (P_diff) implanté en amont et en aval du filtre à particules (44) et un capteur de température (T1) disposé en amont dudit filtre à particules (44), **caractérisé en ce que** l'on :
- supervise l'état des consommateurs d'énergie électrique durant un mode de fonctionnement du moteur en recommandation de conduite pendant une phase de régénération autonome du filtre à particules afin de détecter la défaillance de tout consommateur d'énergie électrique apte à prélever du couple sur le moteur ; on compare la masse de particules présentes dans le filtre à particules (44) avec une première valeur de seuil (S1) et
- on commande le régime du moteur en fonction de la détection de la défaillance de tout consommateur d'énergie électrique, de telle sorte qu'on compare en continu de la charge de l'alternateur du moteur avec une deuxième valeur de seuil (S2), et dans lequel, lorsque la charge de l'alternateur est inférieure ou égale à la deuxième valeur de seuil (S2), on transmet au calculateur du moteur une consigne de régime de ralenti nominal et lorsque la charge de l'alternateur est supérieure à la deuxième valeur de seuil (S2), on transmet au calculateur du moteur une consigne de régime de ralenti accéléré.

2. Procédé selon la revendication 1, dans lequel, lors de la supervision de l'état des consommateurs d'énergie électrique, on vérifie l'état de l'alternateur du moteur.

3. Unité électronique de commande (50) d'un moteur à combustion interne comprenant un collecteur d'admission d'air frais (14), un collecteur d'échappement (16) et un système de dépollution (40) comprenant au moins un premier dispositif de dépollution (42) et un filtre à particules (44) disposé dans la ligne d'échappement (32) en aval d'un catalyseur d'oxydation (42), le système de dépollution (40) comprenant en outre un capteur (46) de pression différentielle (P_diff) implanté en amont et en aval du filtre à particules (44) et un capteur de température (T1) disposé en amont dudit filtre à particules (44), **caractérisé en ce qu'**elle comprend :
- un système (60) de supervision de l'état des consommateurs d'énergie électrique durant un mode de fonctionnement du moteur en recommandation de conduite pendant une phase de régénération autonome du filtre à particules, ledit système (60) de supervision de l'état des consommateurs d'énergie électrique durant un mode de fonctionnement du moteur en recommandation de conduite étant configuré pour détecter la défaillance de tout consommateur d'énergie électrique apte à prélever du couple sur le moteur, de telle sorte que le système (60) de supervision de l'état des consommateurs d'énergie électrique comprend un module (62) de comparaison de la masse de particules présentes dans le filtre à particules (44) avec une première valeur de seuil (S1); et
- un système (68) de commande du régime du moteur en fonction de la détection de la défaillance de tout consommateur d'énergie électrique par le système de supervision (60), de telle sorte que le système (60) de supervision de l'état des consommateurs d'énergie électrique comprend un module (66) de comparaison en continu de la charge de l'alternateur du moteur avec une deuxième valeur de seuil (S2), lorsque la charge de l'alternateur est inférieure ou égale à la deuxième valeur de seuil (S2), le système (68) de commande du régime du moteur est configuré pour transmettre au calculateur du moteur une consigne de régime de ralenti nominal et lorsque la charge de l'alternateur est supérieure à la deuxième valeur de seuil (S2), le système (68) de commande du régime du moteur est configuré pour transmettre au calculateur du moteur une consigne de régime de ralenti accéléré.

4. Unité de commande (50) selon la revendication 3, dans lequel le système (60) de supervision de l'état des consommateurs d'énergie électrique comprend un module (64) de vérification de l'état de l'alternateur du moteur.

5. Véhicule automobile comprenant une unité électronique de commande selon l'une quelconque des revendications 3 à 4.

## Patentansprüche

1. Verfahren zum Steuern (100) einer Brennkraftmaschine mit einem Frischluftansaugkrümmer (14), einem Abgaskrümmer (16) und einem Abgasreinigungssystem (40), das mindestens eine erste Abgasreinigungsvorrichtung (42) und einen Partikelfilter (44) umfasst, der in der Abgasleitung (32) stromabwärts eines Oxidationskatalysators (42) angeordnet ist, wobei das Abgasreinigungssystem (40) ferner einen stromaufwärts und stromabwärts des Partikelfilters (44) angeordneten Differenzdrucksensor (46) (P_diff) umfasst und eines Temperatursensors (T1), der stromaufwärts des Partikelfilters (44) angeordnet ist, **dadurch gekennzeichnet, dass**:
- der Zustand der elektrischen Energieverbraucher während eines Betriebsmodus des Motors in der Fahrempfehlung während einer autonomen Regenerationsphase des Partikelfilters überwacht wird, um der Ausfall jedes elektrischen Energieverbrauchers zu erkennen, der in der Lage ist, Drehmoment vom Motor abzuziehen; die Partikelmasse im Partikelfilter (44) wird mit einem ersten Schwellenwert (S1) verglichen und
- die Motordrehzahl in Abhängigkeit von der Erkennung des Ausfalls eines elektrischen Energieverbrauchers derart gesteuert wird, dass die Last der Lichtmaschine des Motors kontinuierlich mit einem zweiten Schwellwert (S2) verglichen wird, wobei bei einer Last der Lichtmaschine kleiner oder gleich dem zweiten Schwellwert (S2) dem Motorrechner ein Sollwert für die normale Leerlaufdrehzahl und bei einer Last der Lichtmaschine größer als der zweite Schwellwert (S2) dem Motorrechner ein Sollwert für die erhöhte Leerlaufdrehzahl übermittelt wird.

2. Verfahren nach Anspruch 1, bei dem bei der Überwachung des Zustands der elektrischen Energieverbraucher der Zustand der Lichtmaschine des Motors überprüft wird.

3. Elektronische Steuereinheit (50) einer Brennkraftmaschine mit einem Frischluftansaugkrümmer (14), einem Abgaskrümmer (16) und einem Abgasreinigungssystem (40), das mindestens eine erste Abgasreinigungsvorrichtung (42) und einen Partikelfilter (44) umfasst, der in der Abgasleitung (32) stromabwärts eines Oxidationskatalysators (42) angeordnet ist, wobei das Abgasreinigungssystem (40) ferner einen stromaufwärts und stromabwärts des Partikelfilters (44) angeordneten Differenzdrucksensor (46) (P_diff) umfasst und eines Temperatursensors (T1), der stromaufwärts des Partikelfilters (44) angeordnet ist, **dadurch gekennzeichnet, dass** sie umfasst:
- ein System (60) zur Überwachung des Zustands der elektrischen Energieverbraucher während eines Betriebsmodus des Motors in der Fahrempfehlung während einer autonomen Regenerationsphase des Partikelfilters, wobei das System (60) zur Überwachung des Zustands der elektrischen Energieverbraucher während eines Betriebsmodus des Motors in der Fahrempfehlung so konfiguriert ist, dass es den Ausfall jedes elektrischen Energieverbrauchers, der in der Lage ist, Drehmoment vom Motor abzuziehen, erfasst, sodass das System (60) zur Überwachung des Zustands der elektrischen Energieverbraucher ein Modul (62) zum Vergleich der Partikelmasse im Partikelfilter (44) mit einem ersten Schwellenwert (S1) umfasst; und
- ein System (68) zur Steuerung der Motordrehzahl in Abhängigkeit von der Erkennung eines Ausfalls eines beliebigen elektrischen Verbrauchers durch das Überwachungssystem (60), wobei das Überwachungssystem (60) des Zustands der elektrischen Verbraucher ein Modul (66) zur kontinuierlichen Überwachung umfasst, das die Last der Lichtmaschine des Motors mit einem zweiten Schwellenwert (S2) vergleicht, wenn die Last der Lichtmaschine kleiner oder gleich dem zweiten Schwellenwert (S2) ist, ist das System (68) zur Steuerung der Motordrehzahl so konfiguriert, dass es dem Motorsteuergerät einen Sollwert für die normale Leerlaufdrehzahl übermittelt, und wenn die Last der Lichtmaschine größer als der zweite Schwellenwert (S2) ist, ist das System (68) zur Steuerung der Motordrehzahl so konfiguriert, dass es dem Motorsteuergerät einen Sollwert für eine erhöhte Leerlaufdrehzahl übermittelt.

4. Steuereinheit (50) nach Anspruch 3, wobei das System (60) zur Überwachung des Zustands der elektrischen Energieverbraucher ein Modul (64) zur Überprüfung des Zustands der Lichtmaschine des Motors umfasst.

5. Kraftfahrzeug mit einer elektronischen Steuereinheit nach einem der Ansprüche 3 bis 4.

## Claims

1. A method (100) for controlling an internal combustion engine comprising a fresh air intake manifold (14), an exhaust manifold (16) and a pollution control system (40) comprising at least a first pollution control device (42) and a particulate filter (44) positioned in the exhaust line (32) downstream of an oxidation catalyst (42), the pollution control system (40) further comprising a differential pressure sensor (P_diff) (46) located upstream and downstream of the particulate filter (44), and a temperature sensor (T1) positioned upstream of said particulate filter (44), **characterized in that**:
- the status of electrical energy consumers is monitored during an engine operating mode corresponding to a driving recommendation, during an autonomous regeneration phase of the particulate filter, in order to detect the failure of any electrical energy consumer capable of drawing torque from the engine; the mass of particles present in the particulate filter (44) is compared with a first threshold value (S1); and
- the engine speed is controlled based on the detection of the failure of any electrical energy consumer, such that the load of the engine alternator is continuously compared with a second threshold value (S2), wherein, when the alternator load is less than or equal to the second threshold value (S2), a nominal idle speed command is transmitted to the engine control unit, and when the alternator load exceeds the second threshold value (S2), an accelerated idle speed command is transmitted to the engine control unit.

2. The method according to claim 1, wherein, when monitoring the status of the electrical energy consumers, the status of the engine alternator is checked.

3. An electronic control unit (50) for an internal combustion engine comprising a fresh air intake manifold (14), an exhaust manifold (16) and a pollution control system (40) comprising at least a first pollution control device (42) and a particulate filter (44) positioned in the exhaust line (32) downstream of an oxidation catalyst (42), the pollution control system (40) further comprising a differential pressure sensor (46) (P_diff) positioned upstream and downstream of the particulate filter (44) and a temperature sensor (T1) positioned upstream of said particulate filter (44), **characterized in that** it comprises:
- a system (60) for monitoring the status of the electrical energy consumers during an engine operating mode corresponding to a driving recommendation, during an autonomous regeneration phase of the particulate filter, said system (60) for monitoring the status of the electrical energy consumers during an engine operating mode corresponding to a driving recommendation being configured to detect the failure of any electrical energy consumer capable of drawing torque from the engine, so that the system (60) for monitoring the status of the electrical energy consumers comprises a module (62) for comparing the mass of particles present in the particulate filter (44) with a first threshold value (S1); and
- a system (68) for controlling the engine speed based on the detection of the failure of any electrical energy consumer by the monitoring system (60), so that the system (60) for monitoring the status of the electrical energy consumers comprises a module (66) for continuously comparing the load of the engine alternator with a second threshold value (S2), wherein when the alternator load is less than or equal to the second threshold value (S2), the system (68) for controlling the engine speed is configured to transmit a nominal idle speed command to the engine control unit, and wherein when the alternator load is greater than the second threshold value (S2), the system (68) for controlling the engine speed is configured to transmit an accelerated idle speed command to the engine control unit.

4. A control unit (50) according to claim 3, wherein the system (60) for monitoring the status of the electrical energy consumers comprises a module (64) for checking the status of the engine alternator.

5. A motor vehicle comprising an electronic control unit according to any of claims 3 to 4.
